# EUROPEAN PATENT SPECIFICATION

(11) **EP 2 522 889 B1**
(45) Date of publication and mention of the grant of the patent: **16.09.2015**
(21) Application number: 11165371.3
(22) Date of filing: 09.05.2011
(51) Int. Cl.: F16K 11/00, F24H 9/12

(54) **Hot water supply control device**
Steuervorrichtung zur Abgabe von heißem Wasser
Dispositif de contrôle d'alimentation d'eau chaude

(43) Date of publication of application: 14.11.2012
(73) Proprietor: Rettig ICC B.V., 6199 AA Maastricht-Airport (NL)
(72) Inventor: Arvidsson, Thomas, 341 35 Ljungby (SE); Karlsson, Jerry, 312 61 Mellbystrand (SE)
(74) Representative: Ahlberg, Lena Camilla

(56) References cited:
- WO-A1-97/02457
- DE-A1- 1 816 019
- DE-A1- 4 112 057
- DE-A1- 4 124 304

## Description

### Technical field

The present disclosure relates to a hot water supply control device according to the preamble of claim 1. WO 97/02457 discloses such a device.

### Background

Such supply control devices are widely used, and usually provide a lot more efficient heating than comparable legacy systems where the radiator flow is manually controlled by means of a valve.

One problem associated with such arrangements is however to provide even more efficient regulation of heat.

### Summary

One object of the present diclosure is therefore to provide a hot water supply control device which is even more energy efficient. This object is achieved by means of the features defined in the characterizing portion of claim 1. More particularly, in a control device of the initially mentioned kind, there is provided a second valve cone on the valve spindle, which is adapted to shut the bypass flow off at a temperature which is higher than the temperature at which the radiator flow is cut off. This means that, if the room becomes hot enough, also the bypass flow can be cut off. This saves energy as the bypass line itself functions as a radiator, as long as hot water flows therein, particularly if the bypass line has little or no insulation. In addition to lowered energy consumption, the room comfort may also be improved as the room temperature may come closer to the temperature intended when adjusting the individual radiator control arrangements.

The difference between the radiator cut off temperature and the bypass cut off temperature may be in the range between 1.5 and 5° K, typically at 3° K with a thermostat.

Optionally, the valve spindle may have a third valve cone, which is adapted to shut the radiator flow off at a temperature which is at least 5° K lower than the temperature at which the first valve cone opens the radiator flow. This allows the controll arrangement to provide a third function, namely that the radiator is shut off e.g. if the thermostat is removed.

### Brief description of the drawings

Fig 1 illustrates schematically a radiator arrangement for heating a room.
Fig 2 shows a valve block in cross section.
Fig 3 shows a control device according to the present disclosure in cross section.
Fig 4A-4C illustrate schematically the valves of the control device in three different positions.
Fig 5 shows the control device of fig 3 provided with a third valve cone.

### Detailed description

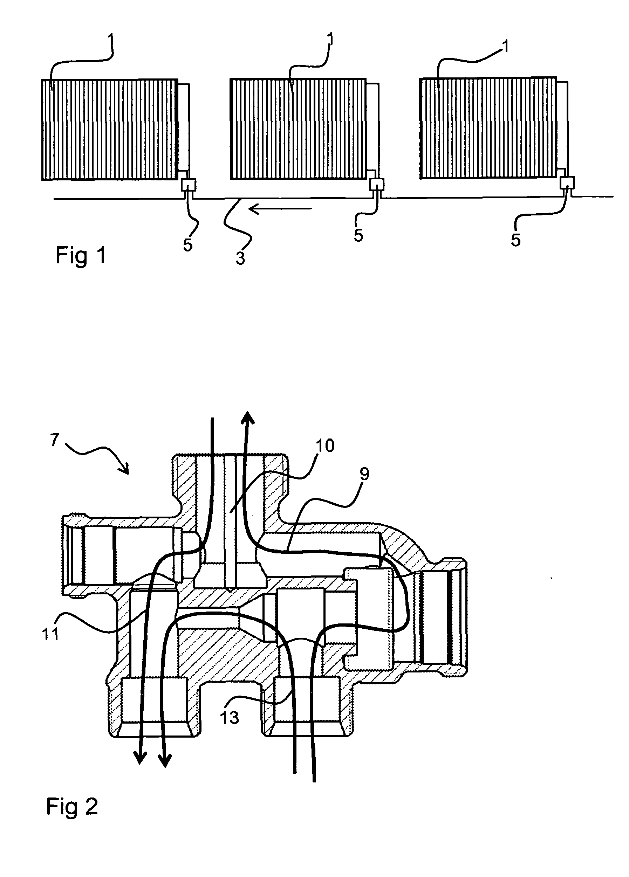

Fig 1 illustrates schematically a radiator arrangement for heating a room. In the illustrated case, three radiators 1, are fed by a single tube feeding line 3; a type of arrangement which is very common in many countries. The line 3 conveys a flow of hot water and a control device 5 at each radiator 1 controls the amount of water that is tapped from the feeding line 3 at every instant. This amount is controlled by means of a thermostat arrangement, as is well known. The remaining flow is bypassed back to the feeding line in order to be available to subsequent radiators downstream. There is thus provided a bypass counduit, with some constriction to ensure that the radiator is not short-circuited. The present disclosure is related to such a control device.

Fig 2 shows, in cross section, a valve block 7 suitable for such a control device. In this drawing, all interior parts have been removed in order to better explain how the different flows pass through the structure.

There is thus illustrated a radiator flow which includes a first path 9, leading from an incoming feeding line to the radiator, and a second path 11, leading from the radiator to an outgoing feeding line. The flows to and from the radiator are separated by a wall 10 in the conduit connecting to the radiator.

Additionally, there is shown a bypass flow 13 which leads directly from the incoming feeding line to the outgoing feeding line through a bypass conduit having a constriction therein.

In the supply control device of the present disclosure, there is provided, in addition to the valve that controls the amount of water led to the radiator, a valve that controls the bypass flow, as will now be illustrated.

In heating systems where the feeding line itself has no or little insulation, this provides a considerable improvement. In a case with a known heating system where all radiators in a room are shut off, hot water will still flow in the feeding line through the bypass conduits of the control devices. As the feeding line itself emits heat to the room, usually in the floor, it will itself act as a radiator. This means not only that energy is wasted, but also that the room temperature will be higher than what was intended when the radiator control devices were set.

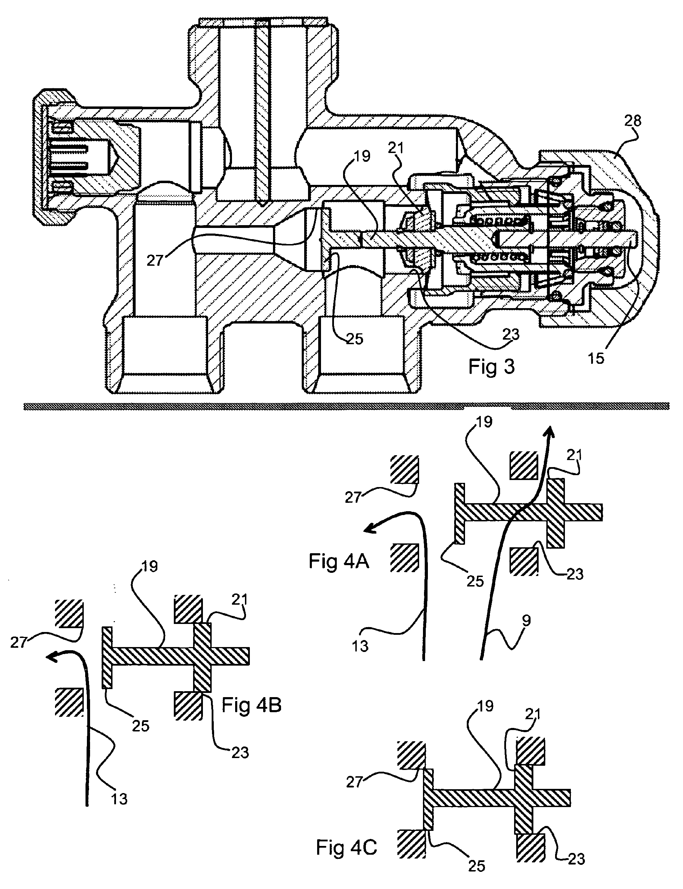

Fig 3 shows, in cross section, a control device according to the present disclosure, which obviates this problem. The control device includes means, in the illustrated case a protruding pin 15, for connecting the control device to a thermostate (not shown), which includes a sensor element, such as a wax body that changes its shape in response to ambient temperature changes. Other types of sensor elements are also possible. The sensor acts, via the connecting means 15, on a valve spindle 19 which performs an axial motion in response to ambient temperature changes. In principle, the protruding pin may be integrated with the spindle. In the drawings an adjustment cap 28 is shown which is used when the control device is initially fitted, and is later removed and replaced by a thermostat. The thermostat may or may not be included with the control device, when delivered.

A first valve cone 21 is attached to the valve spindle 19 and is devised operate against a first valve seat 23. The combination of the first valve cone 21 and the first valve seat 23 forms a first valve which controls the amount of hot water that follows the radiator flow (cf. 9, 11 in fig 2) and thus enters the radiator. When the first valve cone 21 approaches the first valve seat 23, that amount is gradually decreased until the first valve cone 21 reaches the first valve seat 23 and the radiator flow is cut off.

The first valve cone 21 and the first valve seat 23 have dimensions that allow the first valve cone to proceed further once the cut off position is reached. Thus, at the cut off position, the first valve cone 21 does not rest against the first valve seat 23 in the axial direction of the valve spindle 19, but still closes the radiator flow substantially completely.

There is further provided on the valve spindle 19 a second valve cone 25 and a second valve seat 27, together forming a second valve. The combination of the second valve cone 25 and the second valve seat 27 controls the bypass flow (cf. 13 in fig 2). The relative positions of the first and second valve cones 21, 25 on the valve spindle 19, and of the first and second valve seats 23, 27 make sure that at the position where the radiator flow is cut off, the bypass flow still flows. However, as the first valve cone 21 is allowed to propagate further, the second valve cone 25 eventually arrives at a position where also the bypass flow is shut off. This means that, if the room becomes warm enough, also the bypass flow is shut off, such that the flow in the feeding line is more or less interrupted, thereby reducing or eliminating the above-mentioned additional heating from the feeding line.

Fig 4A-4C illustrate schematically the valves of the control device in three different positions. The movement of the valve spindel in these figures is greatly exaggerated in order to illustrate the working principle.

In fig 4A, both the radiator flow 9 and the bypass flow 13 are allowed to pass the control arrangement, as the valve spindle 19 is in a position to the right in the drawing. When the ambient room temperature rises, the spindle 19 moves to the left, and reaches the position illustrated in fig 4B where the radiator flow has been cut off, but the bypass flow 13 still flows, such that other radiators may on the feeding line may extract hot water therefrom.

As the first valve cone 21 fits in the first valve seat 23 and is allowed to propagate furter to the left, even after cutting off the radiator flow, the valve spindle 19 can move even further as the temperatur rises. Finally, the spindle reaches the position illustrated in fig 4C where also the bypass flow is cut off. Typically this should happen at a temperature 3°K higher than the temperature at which the radiator flow is cut off, even though a temperature difference in the range 1.5-5°K has been considered useful. This is determined by the cut off positions of the first and second valve and of the type of thermostat used. Needless to say, the valves do close the flow gradually as they approach the respective valve seats. The above-mentioned temperature differences relate to the positions where the valves shut the respective flows off completely, except for some minor leakage.

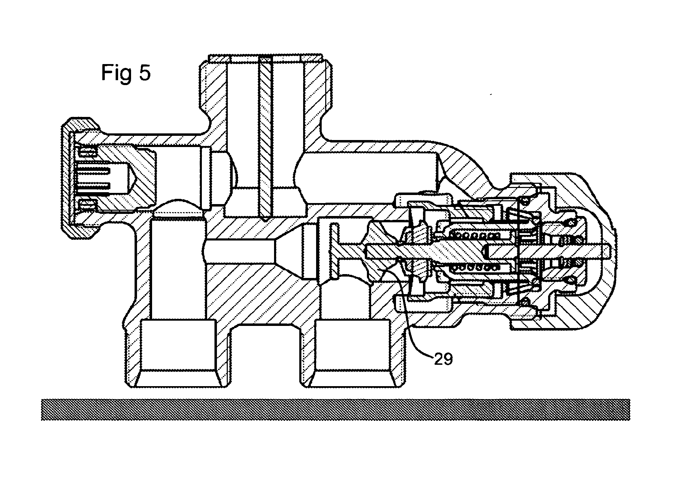

Fig 5 shows the control device of fig 3 provided with an optional third valve cone 29. Such an arrangement may provide a further function, namely to make sure that the radiator flow is cut off in cases where excessive waste of heat may occur. This function may for instance be activated if the radiator is placed beneath a window that is accidently left open, or the thermostat is removed. In such cases, the valve spindle is moved considerably to the right, either by the thermostat sensing a very cold temperature or by the thermostat being absent. The third valve cone 29 then cuts the radiator flow off against a valve seat, which in the illustrated case is the backside of the first valve seat 23. Typically, this is done at a temperature 5°K than the temperature at which the first valve opens. Thereby, a considerable amount of energy can be saved in such situations.

The present disclosure is not restricted by the above examples and may be varied and altered in different ways within the scope of the appended claims. For instance, instead of having a first valve seat which allows the first valve cone to proceed even though the flow has been cut off, a moveable first valve seat or a resiliently urged valve cone may be conceivable.

## Claims

1. A hot water supply control device in a radiator, which is fed by an incoming feeding line, wherein the control device comprises
means (15) for connecting to a thermostat, responsive to the temperature near the radiator,
a valve spindle (19) connected to said means and having a first valve cone (21) adapted control a radiator flow of water supplied to the radiator, and
a bypass conduit (14) arranged such that it may lead a bypass flow of water past the radiator from the incoming feeding line to an outgoing feeding line, **characterized in that** the valve spindle (19) has a second valve cone (25), which is adapted to shut the bypass flow off at a temperature which is higher than the temperature at which the radiator flow is cut off.

2. A hot water supply control device according to claim 1, further comprising a thermostat and wherein the difference between the radiator cut off temperature and the bypass cut off temperature is in the range between 1.5 and 5° K.

3. A hot water supply control device according to claim 2, wherein the difference between the radiator cut off temperature and the bypass cut off temperature is 3° K.

4. A hot water supply control device according to any of the preceding claims, further comprising a thermostat and wherein the valve spindle has a third valve cone (29), which is adapted to shut the radiator flow off at a temperature which is at least 5° K lower than the temperature at which the first valve cone opens the radiator flow.

## Patentansprüche

1. Heißwasserzufuhr-Steuervorrichtung in einem Heizkörper, der durch eine ankommende Speiseleitung gespeist wird, wobei die Steuervorrichtung Folgendes umfasst:
Mittel (15) zum Verbinden mit einem Thermostaten, der auf die Temperatur nahe dem Heizkörper anspricht,
eine Ventilspindel (19), die mit den Mitteln verbunden ist und einen ersten Ventilkegel (21) hat, der dafür eingerichtet ist, einen Heizkörperstrom von Wasser, das dem Heizkörper zugeführt wird, zu steuern, und
eine Umgehungsleitung (14), die derart angeordnet ist, dass sie einen Umgehungsstrom von Wasser an dem Heizkörper vorbei von der ankommenden Speiseleitung zu einer abgehenden Speiseleitung leiten kann, **dadurch gekennzeichnet, dass** die Ventilspindel (19) einen zweiten Ventilkegel (25) hat, der dafür eingerichtet ist, den Umgehungsstrom bei einer Temperatur abzuschalten, die höher ist als die Temperatur, bei welcher der Heizkörper abgesperrt wird.

2. Heißwasserzufuhr-Steuervorrichtung nach Anspruch 1, die ferner einen Thermostaten umfasst und wobei der Unterschied zwischen der Heizkörper-Absperrtemperatur und der Umgehungsabsperrtemperatur in dem Bereich zwischen 1,5 und 5°K liegt.

3. Heißwasserzufuhr-Steuervorrichtung nach Anspruch 2, wobei der Unterschied zwischen der Heizkörper-Absperrtemperatur und der Umgehungsabsperrtemperatur 3°K beträgt.

4. Heißwasserzufuhr-Steuervorrichtung nach einem der vorhergehenden Ansprüche, die ferner einen Thermostaten umfasst und wobei die Ventilspindel einen dritten Ventilkegel (29) hat, der dafür eingerichtet ist, den Heizkörperstrom bei einer Temperatur abzuschalten, die wenigstens 5°K niedriger ist als die Temperatur, bei welcher der erste Ventilkegel den Heizkörperstrom öffnet.

## Revendications

1. Dispositif de contrôle d'alimentation d'eau chaude dans un radiateur qui est alimenté par un conduit d'alimentation d'arrivée dans lequel le dispositif de contrôle comprend
un moyen (15) pour connecter à un thermostat responsable de la température près du radiateur,
une tige de soupape (19) connectée audit moyen et ayant un premier cône de soupape (21) adapté pour contrôler un écoulement d'eau de radiateur alimentant le radiateur et
un conduit de dérivation (14) agencé de telle manière qu'il peut guider un écoulement de dérivation d'eau après le radiateur depuis le conduit d'alimentation d'arrivée jusqu'à un conduit d'alimentation de sortie, **caractérisé en ce que** la tige de soupape (19) possède un deuxième cône de soupape (25) qui est adapté pour fermer l'écoulement de dérivation à une température qui est supérieure à la température à laquelle l'écoulement du radiateur est coupé.

2. Dispositif de contrôle d'alimentation d'eau chaude selon la revendication 1 comprenant en plus un thermostat et dans lequel la différence entre la température de coupure du radiateur et la température de coupure de dérivation est dans la gamme se situant entre 1,5 et 5° K.

3. Dispositif de contrôle d'alimentation d'eau chaude selon la revendication 2 dans lequel la différence entre la température de coupure du radiateur et la température de coupure de dérivation est de 3° K.

4. Dispositif de contrôle d'alimentation d'eau chaude selon l'une quelconque des revendications précédentes, comprenant en plus un thermostat et dans lequel la tige de soupape possède un troisième cône de soupape (29) qui est adapté pour fermer l'écoulement du radiateur à une température qui est au moins de 5° K inférieure à la température à laquelle le premier cône de soupape ouvre l'écoulement du radiateur.
